# EUROPEAN PATENT APPLICATION

(11) **EP 4 741 131 A2**
(43) Date of publication of application: **13.05.2026**
(21) Application number: 25203654.6
(22) Date of filing: 22.09.2025
(51) Int. Cl.: B29B 17/00, B29K 105/04

(54) **CORE MATERIAL OBTAINED FROM WASTE POWDER OF THERMOPLASTIC FOAMS AND SANDWICH COMPOSITE PARTS CONTAINING THIS MATERIAL**

(30) Priority: 23.09.2024 TR 2024012619
(71) Applicant: Telateks Tekstil Ürünleri Sanayi ve Ticaret Anonim Sirketi, 34956 Istanbul (TR)
(72) Inventor: BA ER, Gülnur, stanbul (TR); KABACA, Rümeysa Zeynep, stanbul (TR)
(74) Representative: Yamankaradeniz, Kemal

(57) **Abstract**

The disclosure relates to obtaining core material by mixing waste powders generated during the processing of thermoplastic foams with a binder and preferably fiber additive and compressing them in a mold, and to sandwich composite parts using this material. The core material of the disclosure has been developed especially for the production of sandwich composite structures with complex shapes, indented, angled, angular and circular surfaces.

## Description

### Field of the Invention

The invention relates to core material made of synthetic foam and sandwich composite parts containing this material.

The invention particularly relates to obtaining core material by mixing waste powders generated during the processing of thermoplastic foams with a binder and compressing them in a mold, and obtaining sandwich composite parts from this material. The core material of the present invention has been developed especially for the production of sandwich composite structures with complex shapes, indented, angled, angular and circular surfaces.

### State of the Art

Sandwich-shaped fiber-reinforced polymeric composites have the potential for use in many areas of industry such as automotive, aviation, construction, marine and energy sectors. It is used in many special areas, especially in the automotive industry where durability, lightness and insulation are required, as an insulating and robust sheet in the body of cold chain transport vehicles, as an insulating material in structures in the construction industry, as structural parts of surface vehicles in maritime applications and in the production of blades in wind turbines.

Fiber-reinforced polymeric composite sandwich structures are structural elements consisting of a lightweight core material sandwiched between two thin, rigid surface layers. This structure offers a high strength-to-weight ratio and is widely used in different engineering applications. Surface layers are usually made of polymeric matrices reinforced with high-strength fibers such as carbon fiber, glass fiber, or aramid fiber. Thermoset resins such as polyester, vinylester, epoxy or polyurethane are generally used as matrix materials. Surface layers provide high strength, hardness and surface durability to the structure. The core material increases the lightness and thickness of the sandwich structure while also providing impact resistance, energy absorption and insulation properties.

Common core materials include polymeric foams (e.g., PVC, PET, PU foams), honeycomb structures (e.g., aluminum, Nomex, polypropylene honeycomb), and balsa wood. Sandwich materials traditionally used in the composites industry are usually made from core materials such as honeycomb or foam. However, existing core materials generally have a rectangular block structure with a flat surface and do not allow the production of parts with complex shapes, angles, or circular surfaces. The desired complex shape is achieved by applying processes such as cutting, carving, sanding and drilling using the machining method. The amount of waste from the blocks during machining is high and the waste is in the form of waste. These wastes cause serious environmental problems.

For this reason, studies on the re-evaluation of waste foams are ongoing. For example, in the patent application numbered TR2019/19979, the production of an insulation material from waste EPS is described. It is stated that waste EPS can be ground and dissolved in acetone, dissolved in a certain amount of acetone by continuous mixing, and then selected materials can be added and dried in the form of sheets at 50-80°C to obtain insulation material. Ho wever, the materials added to the waste foam are not disclosed in the relevant material, and the resulting product is not intended for use as a sandwich composite core, but is in the form of a sheet for use in the construction industry.

As a result, due to the above-mentioned disadvantages and the inadequacy of the existing solutions, a development is required to be made in the relevant technical field.

### Purpose of the Invention

The invention aims to solve the above-mentioned negativities and it is inspired by the current situation

The main purpose of the invention is to convert the waste powders generated during the machining of foam-shaped core materials used in the state of the art into a core material again by pressing and compression method after mixing them homogeneously with a binding resin. This core material is used in sandwich composite parts to both reduce weight and provide the necessary structural strength. During the compression process, this material takes the shape of complex-shaped molds, making it possible to produce complex-shaped sandwich composite structures. In addition, the durability of the core material can be increased by adding additives such as chopped glass fiber (length 2-5 mm) into the powder and resin mixture. With this invention, environmental damage is prevented by recycling the waste produced.

In order to fulfil the above-mentioned purposes, the invention is a core material that can be in complex shapes to be used in sandwich composite parts for industries such as automotive, aviation, construction, maritime and energy sectors, comprising; waste powders released during the processing of thermoplastic foams and binder resin.

In order to fulfil the above-mentioned purposes, the invention is a method for producing the said core material, comprising the following process steps of:
(i) mixing of waste powders released during the processing of thermoplastic foams with binder resin and preferably fiber additives,
(ii) shaping the mixture in a mold using a compression method to create the desired complex shapes under specified temperature and pressure.

Preferred embodiments of the invention comprise at least one thermoplastic foam waste powder selected from polyurethane (PU), polyethylene (PE), polyethylene terephthalate (PET), polypropylene (PP), polyvinyl chloride (PVC) and polycarbonate (PC).

Preferred embodiments of the invention comprise at least one binder resin selected from polyester, vinylester, epoxy, polyurethane, acrylic-based thermoset resins, or copolyester, copolyamide, polyurethane, polyethylene, polypropylene, epoxy-based thermoplastic resins with a lower melting temperature than the powder itself.

Preferred embodiments of the invention also comprise fiber additive as a reinforcement material, preferably at least one fiber additive selected from glass, carbon, aramid fiber types in different sizes and shapes.

Preferred embodiments of the invention also comprise at least one a connection opening and/or connection element.

Preferred embodiments of the invention are molded at temperatures and pressures reaching 150 MPa and 150°C.

The invention also encompasses sandwich composite parts comprising the core material mentioned herein.

The structural and characteristic features of the invention will be understood clearly by the following figures and the detailed description made with reference to these figures and therefore the evaluation shall be made by taking these figures and the detailed description into consideration.

### Description of Figures

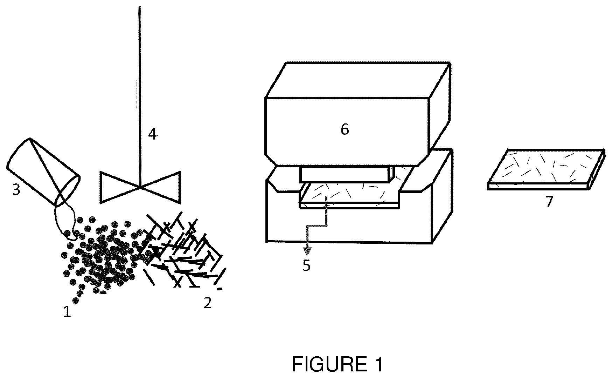

Figure 1 is a schematic representation of the production method of the invention.

### Description of References

1. Waste powders from thermoplastic foam blocks in machining operations
2. Additives such as chopped glass fiber
3. Binding resin
4. Horizontal(z) mixer
5. Powder/additive/binder resin mixture
6. Mold
7. Obtained core material

### Detailed Description of the Invention

In this detailed description, the core material and their preferred embodiments are described solely for the purpose of a better understanding of the subject matter.

The invention relates to obtaining core material by mixing waste powders generated during the processing of thermoplastic foams with a binder and compressing them in a mold, and obtaining sandwich composite parts from this material.

The process of obtaining the core material which is the subject of the invention involves mixing thermoplastic waste powders (waste powders from core processing manufacturing processes) with a binder resin in certain proportions. This mixture is compressed under high pressure and temperature to form a foam. The compaction process is optimized to control the density and mechanical properties of the material. Moreover, with the use of complex shaped molds, the material takes the desired complex shape.

The resulting core material is used in the production of sandwich composite structures. This material is bonded to the upper and/or lower sandwich surfaces, resulting in a structure that is both lightweight and durable. The ability of the material to take the shape of complex shaped molds provides an advantage in the production of complex shaped sandwich composite structures. Fittings made of metal, plastic, etc., which are desired to be included in the final product, can also be installed inside the material.

Accordingly, the invention is a core material comprising thermoplastic foam waste powder and binder resin in its most basic form for use in sandwich composites.

Thermoplastic foam waste powder forms the matrix of the core material of the invention. Within the scope of the invention, at least one thermoplastic foam waste powder selected from polyurethane (PU), polyethylene (PE), polyethylene terephthalate (PET), polypropylene (PP), polyvinyl chloride (PVC) and polycarbonate (PC) is used. In preferred embodiments of the invention, polyethyleneterephthalate (PET), polyurethane (PU) or polyvinylchloride (PVC) foam waste powders are used.

Polymeric thermosetting binder resin binds the thermoplastic foam powder particles together and cures during compression, making the bond permanent. Within the scope of the invention, at least one binder resin selected from polyester, vinylester, epoxy, polyurethane and acrylic based resins is used. Polymeric thermoplastic binder resin melts and binds thermoplastic foam powder particles together during compression under heat and makes the bond permanent when cooled. Within the scope of the invention, at least one binder resin selected from copolyester, copolyamide, polyurethane, polyethylene, polypropylene, epoxy-based thermoplastic resins with a lower melting temperature than the powder itself is used.

In preferred embodiments of the invention, the core material also comprises fiber additive as a reinforcement material to improve its mechanical and thermal properties. Within the scope of the invention, at least one fiber additive selected from glass, carbon and aramid fiber types in different sizes and shapes is used. In a preferred embodiment of the invention, chopped glass fiber (2-5 mm) additive is used.

In the core material production method of the invention, as shown in Figure 1, waste powders generated during the machining of foam-shaped core materials are mixed with additives such as chopped glass fiber (2-5 mm) and a binder resin with appropriate viscosity that can cure or melt at temperatures between 100-150 ° C in a mixer system and turned into a powder/resin mixture. The mixture is transformed into a new core material by the pressing method under the specified temperature and pressure in a mold of the desired complex shape.

Here, since the mixture is a pourable dense solid, a horizontal (z) mixer is preferred, which should be on the horizontal axis for filling and emptying the mixer.

Here, the compression system ensures that the powder/resin mixture is pressed and shaped in a mold for the production of the core material. The system has the pressure capacity (150 MPa) to ensure that the binder resin used adheres the powder particles to each other and reaches the temperatures (150 ° C) that will cure or melt the resin.

The resulting core material can be used in the production of sandwich composite parts by methods such as infusion, RTM or hand lay-up. During the compression process, this material takes the shape of complex-shaped molds, making it possible to produce complex-shaped sandwich composite structures. Connection points such as bolts, screws, inlets, etc. that may be needed in the final product can be installed inside the core material.

## Claims

1. A core material with complex shapes to be used in sandwich composite parts for industries such as automotive, aviation, construction, maritime and energy sectors, **characterized by comprising;** waste powders released during the processing of thermoplastic foams and binder resin.

2. The core material according to claim 1, **characterized by** comprising; at least one thermoplastic foam waste powder selected from polyurethane (PU), polyethylene (PE), polyethylene terephthalate (PET), polypropylene (PP), polyvinyl chloride (PVC) and polycarbonate (PC).

3. The core material according to claim 1, **characterized by** comprising; at least one binder resin selected from polyester, vinylester, epoxy, polyurethane and acrylic based resins is used.

4. The core material according to claim 1, **characterized by** comprising; at least one binder resin selected from copolyester, copolyamide, polyurethane, polyethylene, polypropylene, epoxy-based thermoplastic resins.

5. The core material according to claim 1, **characterized by** comprising; a fiber additive as reinforcement material.

6. The core material according to claim 5, **characterized by** comprising; at least one fiber additive selected from glass, carbon and aramid fiber types in different sizes and shapes.

7. The core material according to claim 1, **characterized by** comprising; at least one connection opening and/or connection element.

8. A production method of core material with complex shapes to be used in sandwich composite parts for industries such as automotive, aviation, construction, maritime and energy sectors, **characterized by comprising** the process steps of;
(i) Mixing of waste powders generated during the processing of thermoplastic foams with binder resin and preferably fiber additives
(ii) shaping the mixture in a mold using a compression method to create the desired complex shapes under specified temperature and pressure.

9. The production method according to claim 8, **characterized in that;** in the process step (i), at least one thermoplastic foam waste powder selected from polyurethane (PU), polyethylene (PE), polyethylene terephthalate (PET), polypropylene (PP), polyvinyl chloride (PVC) and polycarbonate (PC) is used.

10. The production method according to claim 8, **characterized in that;** in the process step (i), at least one binder resin selected from polyester, vinylester, epoxy, polyurethane and acrylic based resins is used.

11. The production method according to claim 8, **characterized by comprising;** in the process step (i), at least one binder resin selected from copolyester, copolyamide, polyurethane, polyethylene, polypropylene and epoxy-based thermoplastic resins.

12. The production method according to claim 8, **characterized in that;** in the process step (i), at least one fiber additive selected from glass, carbon and aramid fiber types in different sizes and shapes is used.

13. The production method according to claim 8, **characterized in that;** in the process step (ii), it is molded at temperatures and pressures reaching 150 MPa and 150°C.

14. A sandwich composite part comprising the core material according to any of the preceeding claims.
